## Europäisches Patentamt
## European Patent Office
## Office européen des brevets

(11) Numéro de publication: **0 153 225**
**B1**

(12) **FASCICULE DE BREVET EUROPÉEN**

(45) Date de publication du fascicule du brevet:
03.02.88

(21) Numéro de dépôt: **85400211.0**

(22) Date de dépôt: **08.02.85**

(51) Int. Cl.⁴: **G 21 C 15/18,** F 28 D 7/16

(54) Echangeur de chaleur équipé de moyens de refroidissement de secours et réacteur nucléaire à neutrons rapides comportant un tel échangeur.

<table>
<tr><td>

(30) Priorité: **14.02.84 FR 8402214**

(43) Date de publication de la demande:
**28.08.85 Bulletin 85/35**

(45) Mention de la délivrance du brevet:
**03.02.88 Bulletin 88/5**

(84) Etats contractants désignés:
**BE DE GB IT NL**

(56) Documents cité:
**EP-A-0 004 218**
**EP-A-0 026 697**
**EP-A-0 068 913**

**Correspondant a la demande de brevet FR.A. 2419565 citeè dans la description**

</td><td>

(73) Titulaire: **COMMISSARIAT A L'ENERGIE ATOMIQUE, 31/33, rue de la Fédération, F-75015 Paris (FR)**
Titulaire: **ELECTRICITE DE FRANCE Service National, 2, rue Louis Murat, F-75008 Paris (FR)**

(72) Inventeur: **Masse, Jean, La Retirado Bât.A, F-04100 Manosque (FR)**

(74) Mandataire: **Mongrédien, André, c/o BREVATOME 25, rue de Ponthieu, F-75008 Paris (FR)**

</td></tr>
</table>

LIBER, STOCKHOLM 1988

## Description

La présente invention se rapporte à un échangeur de chaleur comportant des moyens de refroidissement de secours du fluide primaire. L'invention concerne egalement un réacteur nucléaire à neutrons rapides incorporant un ou plusieurs échangeurs de ce type.

Dans un réacteur nucléaire à neutrons rapides, le coeur du réacteur est immergé dans un métal liquide tel que du sodium contenu dans une cuve à axe vertical obturée à sa partie supérieure par une dalle de fermeture horizontale. En fonctionnement normal, la chaleur dégagée par la réaction de fission dans le coeur du réacteur est absorbée par le métal liquide contenu dans la cuve. Cette chaleur est ensuite transmise par des échangeurs de chaleur à un fluide secondaire généralement constitué par du sodium liquide. La circulation du métal liquide primaire contenu dans la cuve du réacteur entre le coeur et les échangeurs est commandée par des pompes.

Dans les réacteurs à neutrons rapides de type intégré, tels que les réacteurs Phénix et Super-Phénix, l'ensemble du circuit primaire, y compris les pompes et les échangeurs, est localisé à l'intérieur de la cuve du réacteur.

Au contraire, dans les réacteurs à neutrons rapides du type à boucle, une partie du circuit primaire comprenant les échangeurs et parfois aussi les pompes est située hors de la cuve du réacteur.

En cas d'incident de fonctionnement provoquant l'arrêt des pompes primaires, la réaction de fission est immédiatement arrêtée grâce à la chute des barres de sécurité. Toutefois, le coeur du réacteur dégage encore une puissance calorifique résiduelle importante. Afin d'éviter une fusion locale du coeur, cette puissance résiduelle doit être éliminée de façon sûre et efficace.

A cet effet, on a coutume d'équiper les réacteurs nucléaires à neutrons rapides de boucles de refroidissement du réacteur à l'arrêt. Comme l'illustre notamment la demande de brevet europeen EP-A-0 004 218 au nom du Commissariat à l'Energie Atomique, ces boucles de refroidissement comportent généralement des échangeurs de chaleur plongeant directement dans le métal liquide contenu dans la cuve et des pompes assurant la circulation du métal liquide (généralement du sodium) circulant dans ces boucles. La puissance résiduelle du coeur est ainsi évacuée par des échangeurs métal liquide/air.

Si ces boucles de refroidissement du réacteur à l'arrêt présentent des caractéristiques de fonctionnement tout à fait satisfaisantes elles présentent aussi certains inconvénients. Ainsi, la présence à l'intérieur de la cuve du réacteur d'échangeurs de refroidissement du réacteur à l'arrêt distincts des échangeurs principaux conduit à augmenter le nombre de composants présents à l'intérieur de la cuve. En plus de l'augmentation directe du coût résultant de l'augmentation du nombre des composants, cela conduit à accroître le diamètre de la cuve et, par conséquent, le coût du réacteur. Cela conduit également à accroitre le nombre de traversées de la dalle par les composants, ce qui contribue également à augmenter le coût du réacteur.

La présente invention a précisément pour objet un échangeur de chaleur incorporant des moyens de refroidissement de secours permettant de remplacer les échangeurs de refroidissement de secours utilisés habituellement dans les réacteurs à neutrons rapides. La suppression de ces derniers permet d'éviter tous les inconvénients résultant de leur présence dans la cuve du réacteur. De plus, les moyens de refroidissement de secours incorporés à l'échangeur conformément à l'invention sont conçus de façon à pouvoir fonctionner en convection naturelle.

Par ailleurs, bien que l'invention soit particulièrement adaptée pour être utilisée dans un réacteur à neutrons rapides de type intégré, elle n'est pas limitée à cette application et peut être utilisée dans tous les cas où il est nécessaire d'adjoindre à un échangeur de chaleur classique un système de refroidissement de secours. De même, bien que l'invention soit particulièrement adaptée au cas de réacteurs nucléaires à neutrons rapides de type intégré, elle peut aussi être utilisée dans des réacteurs à neutrons rapides de type à boucles.

La présente invention a précisément pour objet un échangeur de chaleur comprenant une enveloppe cylindrique d'axe vertical, dans laquelle est logée un faisceau de tubes verticaux dont les extrémités sont fixées respectivement à une plaque à tubes inférieure et à une plaque à tubes supérieure et débouchent respectivement dans une chambre d'entrée et dans une chambre de sortie de fluide secondaire, une tubulure d'entrée et une tubulure de sortie de fluide secondaire communiquant respectivement avec la chambre d'entrée et avec la chambre de sortie, et un orifice d'entrée et un orifice de sortie de fluide primaire formés dans la partie de l'enveloppe entourant le faisceau de tubes, l'échangeur étant caractérisé en ce qu'il comprend de plus des moyens de refroidissement de secours du fluide primaire comportant une tuyauterie d'entrée et une tuyauterie de sortie aptes à être reliées à des moyens de refroidissement externes et débouchant respectivement dans la chambre d'entrée et dans la chambre de sortie du fluide secondaire, en-dessous desdites tubulures.

Conformément à un mode de réalisation préféré de l'invention, la tuyauterie d'entrée est raccordée à une rampe de distribution logée sous la plaque à tubes inférieure et la tuyauterie de sortie est raccordée à une rampe collectrice située au-dessus de la plaque à tubes supérieure.

L'invention a également pour objet un réacteur nucléaire à neutrons rapides comprenant une cuve remplie de métal liquide et obturée à son extrémité supérieure par une dalle, au moins une pompe assurant la circulation du métal liquide entre le coeur du réacteur et au moins un échangeur de chaleur suspendu à la dalle, le fluide primaire circulant dans l'échangeur étant le métal liquide contenu dans la cuve et le réacteur comprenant de plus des moyens de refroidissement externes tels qu'un échangeur métal liquide/air raccordé entre des tuyauteries d'entrée et de sortie de l'échangeur, ce réacteur étant caractérisé en ce que l'échangeur de chaleur comporte un dispositif d'évacuation de la puissance résiduelle intégré conformément à l'invention.

Bien que dans un tel réacteur, les moyens de refroidissement du réacteur à l'arrêt puissent fonctionner en convection naturelle, des moyens de pompage peuvent aussi être interposés entre l'échangeur et les moyens de refroidissement externes.

On décrira maintenant, à titre d'exemple non limitatif, un mode de réalisation préféré de l'invention en se référant aux dessins annexés dans lesquels:

- la figure 1 est une vue schématique, en coupe transversale partielle, d'un réacteur nucléaire à neutrons rapides comportant des échangeurs de chaleur munis de dispositifs d'évacuation de la puissance résiduelle intégrée, conformément à l'invention, et

- la figure 2 est une vue en coupe à plus grande échelle représentant l'un des échangeurs de chaleur du réacteur de la figure 1.

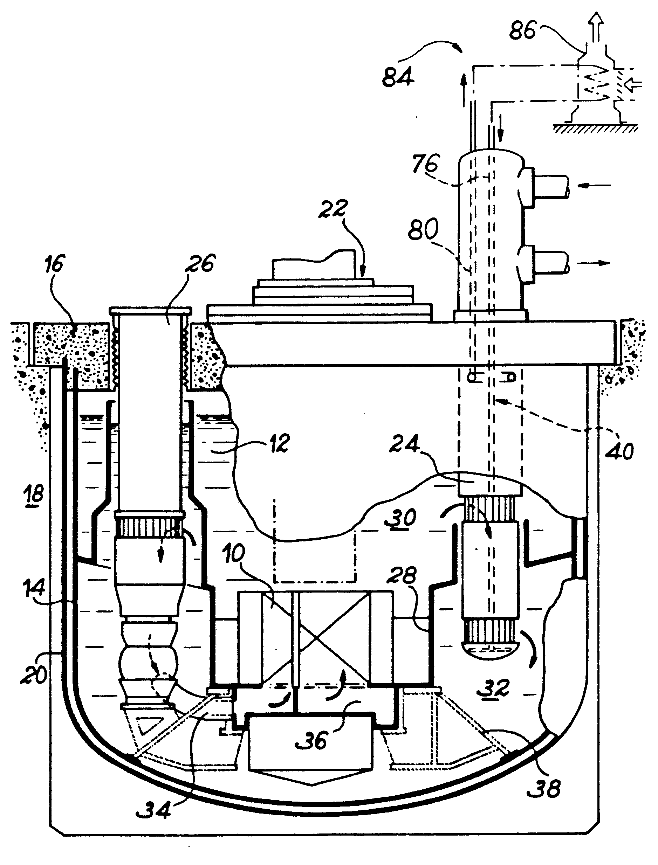

On a représenté schématiquement sur la figure 1 un réacteur nucléaire à neutrons rapides de type intégré. Le coeur 10 du réacteur est immergé dans un métal liquide de refroidissement 12 (habituellement du sodium) contenu à l'intérieur d'une cuve 14 à axe vertical. La partie supérieure de la cuve 14 est obturée par une dalle de fermeture horizontale 16 reposant par sa périphérie sur un puits de cuve 18. La cuve 14, dite cuve principale, est doublée à l'intérieur du puits de cuve 18 par une cuve de sécurité 20 qui est généralement suspendue à la dalle 16, comme la cuve 14.

Dans les réacteurs de type intégré tels que celui qui est représenté schématiquement sur la figure 1, la dalle 16 est traversée par une série de composants nécessaires au fonctionnement du réacteur. La dalle supporte notamment dans sa partie centrale un système de bouchons tournants 22 et, dans sa partie périphérique, des échangeurs de chaleur 24 et des pompes primaires 26 régulièrement répartis autour du coeur, et dont un seul composant de chaque type est représenté sur la figure.

Une cuve interne 28 définit à l'intérieur de la cuve 14 un collecteur chaud 30 contenant le métal liquide chaud débouchant à l'extrémité supérieure du coeur 10 et un collecteur froid 32 dans lequel est recueilli le métal liquide sortant des échangeurs 24. Le métal liquide est ensuite repris par les pompes 26 pour être refoulé par des conduites 34 dans un sommier 36 assurant à la fois l'alimentation du coeur 10 en métal liquide et le supportage du coeur sur le fond de la cuve 14, par l'intermédiaire d'un platelage 38. En fonctionnement, le métal liquide circule ainsi en permanence à travers le coeur et les échangeurs. Ces derniers assurent l'extraction de la chaleur dégagée par la réaction de fission. Cette chaleur est ensuite transférée à un circuit secondaire (non représenté) avant d'être exploitée dans les turbines d'un circuit eau/vapeur, pour produire de l'électricité.

Conformément à l'invention, on introduit à l'intérieur de chacun des échangeurs de chaleur 13 un système 40 de refroidissement du réacteur à l'arrêt. Ce système est destiné, comme on l'a déjà mentionné précédemment, à assurer l'évacuation de la puissance calorifique résiduelle que continue à dégager le coeur du réacteur en cas d'arrêt des pompes primaires 26, malgré la chute des barres de sécurité.

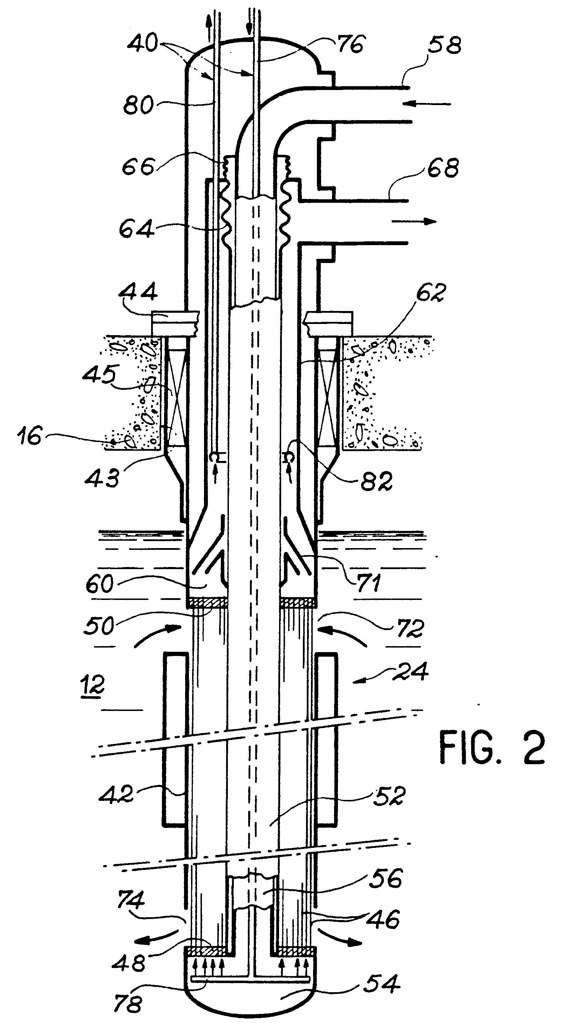

Compte tenu de cette implantation particulière du système de refroidissement du réacteur à l'arrêt à l'intérieur même des échangeurs, on décrira maintenant plus en détail la structure de ces derniers en se référant à la figure 2.

Sur cette figure, on voit que chacun des échangeurs 24 du réacteur de la figure 1 comprend une enveloppe cylindrique externe 42, d'axe vertical. L'enveloppe 42 traverse de façon connue un passage 43 formé dans la dalle 16 et repose sur la face supérieure de celle-ci par une bride 44. L'espace laissé libre entre le passage 43 et l'enveloppe 42 pour permettre le démontage de l'échangeur est rempli par un système d'isolation thermique représenté schématiquement en 45.

La partie de l'échangeur 24 située en-des-sous de la dalle 16 constitue l'échangeur proprement dit, alors que la partie de l'échangeur située au-dessus de la dalle constitue la tête de l'échangeur, par laquelle celui-ci est raccordé aux autres composants de la boucle secondaire correspondante.

L'échangeur proprement dit, qui baigne dans le métal liquide primaire 12, comprend un faisceau de tubes droits verticaux 46 logé dans l'enveloppe 42. Les extrémités des tubes 46 sont fixées de façon connue respectivement à une plaque à tubes horizontale inférieure 48 et à une plaque à tubes horizontale supérieure 50. Ces deux plaques 48 et 50 sont elles-mêmes fixées par leur périphérie externe sur l'enveloppe 42 et par leur périphérie interne sur un tube 52, d'axe vertical confondu avec celui de l'enveloppe 42 et qui s'étend depuis la plaque à tubes inférieure 48 jusqu'au-dessus de la dalle 16.

Des ouvertures d'entrée 72 et de sortie 74 du métal liquide primaire 12 sont formées dans l'enveloppe 42 respectivement en-dessous de la plaque à tubes supérieure 50 et au-dessus de la plaque à tubes inférieure 48. Ces ouvertures permettent au métal liquide 12 de circuler de haut en bas autour des tubes 46 dans l'espace annulaire formé entre l'enveloppe 42 et le tube 52.

En-dessous de la plaque à tubes inférieure 48, les tubes 46 débouchent dans une chambre d'entrée 54 du fluide secondaire. Cette chambre 54 est délimitée à son extrémité inférieure par le fond de l'enveloppe 42. Elle se prolonge vers le haut à l'intérieur d'une cheminée verticale 56 disposée coaxialement dans le tube 52.

A son extrémité supérieure, située juste en-dessous du dôme de l'enveloppe de l'échangeur, la cheminée 56 est coudée à angle droit pour se raccorder sur une tubulure d'entrée 58 du fluide secondaire. Cette tubulure 58 traverse l'enveloppe 42 de l'échangeur.

De façon comparable, les tubes 46 débouchent au-dessus de la plaque à tubes supérieure 50 dans une chambre de sortie annulaire 60. Cette chambre 60 se prolonge vers le haut jusqu'au-dessus de la dalle 16 sous la forme d'un espace annulaire formé entre le tube 52 et une enveloppe interne 62. L'enveloppe 62 est disposée coaxialement entre le tube 52 et l'enveloppe externe 42 et son extrémité inférieure tronconique est fixée à cette dernière au-dessus de la plaque à tubes supérieure 50. L'enveloppe 62 se termine en-dessous de la tubulure d'entrée 58 sous la forme d'une face supérieure plane raccordée par des soufflets d'étanchéité déformables 64 et 66 respectivement à l'extrémité supérieure du tube 52 et à la cheminée 56.

L'extrémité supérieure du collecteur 60 débouche dans une tubulure de sortie 68 traversant de façon étanche l'enveloppe 42 de l'échangeur.

Pour compléter la description de l'échangeur, on ajoutera qu'un mélangeur 71 peut être fixé au tube 52, à l'intérieur du collecteur de sortie 60, juste au-dessus de la plaque à tubes 50.

En fonctionnement normal, le métal liquide secondaire (généralement du sodium) introduit par la tubulure 58 descend dans l'échangeur par la cheminée 56 de la chambre d'entrée 54. Il remonte ensuite dans le faisceau de tubes 46 pour accumuler la chaleur qui lui est transmise par le métal liquide primaire 12 circulant autour des tubes. Il remonte enfin dans la chambre de sortie 60 pour sortir de l'échangeur par la tubulure 68.

Conformément à l'invention, l'échangeur représenté sur la figure 2 comprend de plus des moyens 40 de refroidissement de secours du métal liquide primaire 12 qui circule autour des tubes 46.

Ces moyens de refroidissement de secours 40 comprennent un premier tube vertical 76 disposé selon l'axe de l'échangeur. Le tube 76 traverse successivement le dôme supérieur de l'enveloppe 42 et la partie coudée de la cheminée 56 pour descendre à l'intérieur de celle-ci jusqu'à la partie de la chambre d'entrée 54 située en-dessous de la plaque à tubes inférieure 48. A ce niveau, le tube vertical 76 est raccordé à une rampe de distribution 78 située en-dessous de la plaque à tubes inférieure 48. La rampe 78 est percée d'orifices sur sa face supérieure en regard de la plaque à tubes 46.

Les moyens de refroidissement de secours 40 comprennent de plus une tuyauterie de sortie verticale 80 décalée par rapport à l'axe de l'échangeur et traversant successivement le dôme supérieur de l'enveloppe 42 et la face supérieure plane de l'enveloppe 62. L'extrémité inférieure de la tuyauterie de sortie 80 est située approximativement au niveau de la face inférieure de la dalle 16. La tuyauterie 80 est raccordée à ce niveau à une rampe collectrice annulaire 82 dont la partie inférieure est percée d'orifices sur tout le pourtour de la chambre de sortie 60.

Conformément à l'invention, les tuyauteries d'entrée 76 et de sortie 80 débouchent toutes deux en-dessous du niveau de la tubulure de sortie 68 de la boucle secondaire, cette dernière étant elle-même située en-dessous de la tubulure d'entrée 58. Ainsi, la partie secondaire de l'échangeur 24 dans laquelle plongent les tuyauteries 76 et 80 reste immergée dans le métal liquide secondaire, même lorsque la boucle secondaire correspondante est vidangée.

Si l'on se réfère à nouveau à la figure 1, on voit que la boucle de refroidissement 64 du réacteur à l'arrêt comporte, à l'extérieur de l'échangeur 24, un échangeur métal liquide/air de type connu, qui est représenté schématiquement en 86. Cette boucle 84 peut comporter en outre une pompe de circulation, par exemple électromagnétique. Toutefois, la circulation du métal liquide secondaire à l'intérieur de la boucle 84 est assurée automatiquement par convection naturelle, de sorte qu'une telle pompe n'est pas indispensable à l'invention.

Grâce aux caractéristiques de l'invention, on voit qu'en cas d'arrêt des pompes primaires et de chute des barres de sécurité dans le coeur du réacteur, la puissance résiduelle que continue à dégager le coeur du réacteur est évacuée par une circulation en convection naturelle ou, éventuellement, forcée à l'aide d'une pompe, du métal liquide secondaire contenu dans l'échangeur. En effet, comme l'indiquent les flèches sur la figure 2, ce métal liquide circule alors de bas en haut entre la rampe de distribution 78 et la rampe collectrice 82 à l'intérieur des tubes 46 de l'échangeur pour extraire la chaleur véhiculée par le métal liquide primaire, qui circule lui-même autour des tubes entre les orifices d'entrée 72 et de sortie 74. Le métal liquide réchauffé prélevé par la rampe collectrice 62 est acheminé par la tuyauterie de sortie 60 et par la boucle externe 64 jusqu'à l'échangeur métal liquide/air 86 où il est à nouveau refroidi. Le métal liquide revient alors par la tuyauterie d'entrée 76 jusqu'à la rampe de distribution 78, pour recommencer un nouveau cycle.

Compte tenu de la disposition des rampes 82 et 78 en-dessous des tubulures 68 et 58, le système de refroidissement du réacteur à l'arrêt ainsi réalisé est utilisable même en cas d'indisponibilité des circuits secondaires du réacteur. En outre, la description qui vient d'en être faite montre que ce système est particulièrement simple. De plus, il présente une grande fiabilité si tous les échangeurs 24 en sont équipés. Comme on l'a déjà mentionné, il présente aussi l'avantage de pouvoir fonctionner en convection naturelle, ce qui constitue un avantage important du point de vue de la sûreté.

Bien entendu, l'invention n'est pas limitée au mode de réalisation qui vient d'être décrit à titre d'exemple. Ainsi, comme on l'a vu, l'invention n'est pas limitée à un échangeur de chaleur destiné à être utilisé entre les circuits primaire et secondaire d'un réacteur nucléaire à neutrons rapides de type intégré. En effet, on conçoit aisément qu'un tel système pourrait également être utilisé dans un échangeur placé entre les circuits primaire et secondaire d'un réacteur à neutrons rapides du type boucle. De façon plus générale, un échangeur conforme à l'invention pourrait aussi être utilisé dans toute autre application nécessitant des moyens de refroidissement de secours du fluide primaire présentant une capacité réduite par rapport à la capacité d'échange thermque présentée par l'échangeur en fonctionnement normal.

Lorsqu'il est utilisé dans un réacteur nucléaire, l'échangeur selon l'invention peut éventuellement être associé à des échangeurs de conception classique.

En ce qui concerne l'échangeur proprement dit, il est clair que l'invention peut s'appliquer à tous les échangeurs dans lesquels les tubulures d'entrée et de sortie du fluide secondaire sont situées à la partie supérieure de l'enveloppe de l'échangeur. En effet, il est alors toujours possible de faire déboucher les tuyauteries d'entrée et de sortie des moyens de refroidissement de secours en-dessous de ces tubulures afin d'assurer le fonctionnement du système de refroidissement de secours, même en cas de vidange du circuit secondaire. De même, la rampe de distribution et la rampe collectrice pourraient être modifiées ou même supprimées sans sortir du cadre de l'invention.

## Revendications

1. Echangeur de chaleur comprenant une enveloppe cylindrique (42) d'axe vertical, dans laquelle est logé un faisceau de tubes verticaux (46) dont les extrémités sont fixées respectivement à une plaque à tubes inférieure (48) et à une plaque à tubes supérieure (50) et débouchent respectivement dans une chambre d'entrée (54) et dans une chambre de sortie (60) de fluide secondaire, une tubulure d'entrée (58) et une tubulure de sortie (66) de fluide secondaire communiquant respectivement avec la chambre d'entrée et avec la chambre de sortie, et un orifice d'entrée (72) et un orifice de sortie (74) de fluide primaire formés dans la partie de l'enveloppe entourant le faisceau de tubes, l'échangeur étant caractérisé en ce qu'il comprend de plus des moyens de refroidissement de secours (40) du fluide primaire comportant une tuyauterie d'entrée (76) et une tuyauterie de sortie (80) aptes à être reliées à des moyens de refroidissement externes (86) et débouchant respectivement dans la chambre d'entrée (54) et dans la chambre de sortie (60) du fluide secondaire, en-dessous desdites tubulures (58, 68).

2. Echangeur de chaleur selon la revendication 1, caractérisé en ce que la tuyauterie d'entrée (76) est raccordée à une rampe de distribution (78) logée sous la plaque à tubes inférieure (48).

3. Echangeur de chaleur selon l'une quelconque des revendications 1 et 2, caractérisé en ce que la tuyauterie de sortie (80) est raccordée à une rampe collectrice (82) située au-dessus de la plaque à tubes supérieure (50).

4. Réacteur nucléaire à neutrons rapides comprenant une cuve (14) remplie de métal liquide (12) et obturée à son extrémité supérieure par une dalle (16), au moins une pompe (26) assurant la circulation du métal liquide entre le coeur (10) du réacteur et au moins un échangeur de chaleur (24) suspendu à la dalle, le fluide primaire étant le métal liquide contenu dans la cuve, caractérisé en ce que ledit échangeur de chaleur est réalisé selon l'une quelconque des revendications 1 à 3, le réacteur comprenant de plus des moyens de refroidissement externes (84) raccordés entre des tuyauteries d'entrée (76) et de sortie (80) de l'échangeur.

5. Réacteur selon la revendication 4, caractérisé en ce que des moyens de pompage sont interposés entre l'échangeur (24) et les moyens de refroidissement externes (84).

## Patentansprüche

1. Wärmetauscher mit einem zylindrischen Mantel (42) mit vertikaler Achse, in dem ein vertikales Rohrbündel (46) angeordnet ist, dessen Enden jeweils an einer unteren Rohrplatte (48) und an einer oberen Rohrplatte (15) befestigt sind und in eine Einlaßkammer (54) bzw. eine Sekundärfluidauslaßkammer (60) münden, einem Einlaßrohr (58) und einem Sekundärfluidauslaßrohr (68), die mit der Einlaßkammer bzw. der Auslaßkammer in Verbindung stehen, und einer Einlaßöffnung (72) und einer Primärfluidauslaßöffnung (74), die in dem Teil des Mantels ausgebildet sind, der das Rohrbündel umgibt, dadurch gekennzeichnet, daß der Wärmetauscher ferner Hilfskühlmittel (40) für das Primärfluid aufweist, die eine Einlaßleitungseinrichtung (76) und eine Auslaßleitungseinrichtung (80) umfassen, die mit äußeren Kühleinrichtungen (86) verbunden werden können und unterhalb der genannten Rohre (58, 68) in die Einlaßkammer (54) bzw. in die Sekundärfluidauslaßkammer (60) münden.

2. Wärmetauscher nach Anspruch 1, dadurch gekennzeichnet, daß die Einlaßleitungseinrichtung (76) mit einer Verteilerrohreinrichtung (78) verbunden ist, die unter der unteren Rohrplatte (48) angeordnet ist.

3. Wärmetauscher nach Anspruch 1 oder 2, dadurch gekennzeichnet, daß die Auslaßleitungseinrichtung (80) mit einer Sammelrohreinrichtung (82) verbunden ist, die oberhalb der oberen Rohrplatte (50) angeordnet ist.

4. Schneller Kernreaktor mit einem Behälter (14), der mit Flüssigmetall (12) gefüllt und an seinem oberen Ende mit einer Platte (16) verschlossen ist, wenigstens einer Pumpe (26), die den Umlauf des Flüssigmetalls zwischen dem Reaktorkern (10) und wenigstens einem Wärmetauscher (24) sicherstellt, der von der Platte gehaltert ist, wobei das Primärfluid das in dem Behälter enthaltene Flüssigmetall ist, dadurch gekennzeichnet, daß der Wärmetauscher nach irgend einem der Ansprüche 1 bis 3 ausgebildet ist, und der Reaktor ferner äußere Kühleinrichtungen (84) aufweist, die mit der Einlaßrohreinrichtung (76) und der Auslaßrohreinrichtung (80) verbunden sind.

5. Reaktor nach Anspruch 4, dadurch gekennzeichnet, daß Pumpeinrichtungen zwischen den Wärmetauscher (24) und die äußeren Kühleinrichtungen (84) angeordnet sind.

## Claims

1. Heat exchanger incorporating a vertically axed cylindrical envelope (42), in which is located a bundle of vertical tubes (46), whose ends are respectively fixed to a lower tube plate (48) and to an upper tube plate (50) and which respectively issue into an inlet chamber (54) and an outlet chamber (60) for the secondary fluid, an intake pipe (58) and a discharge pipe (68) for the secondary fluid respectively communicating with the inlet chamber and the outlet chamber, and inlet (72) and outlet (74) for the primary fluid formed in that part of the envelope which surrounds the bundle of tubes, characterized in that the exchanger also comprises emergency cooling means (40) for the primary fluid incorporating an inlet pipe (76) and an outlet pipe (80) which can be connected to external cooling means (86) and which respectively issue into the inlet chamber (54) and the outlet chamber (60) for the secondary fluid below the intake and discharge pipes (58, 68).

2. Heat exchanger according to claim 1, characterized in that the inlet pipe (76) is connected to a distribution ramp (78) housed beneath the lower tube plate (48).

3. Heat exchanger according to claim 1, characterized in that the outlet pipe (80) is connected to a collecting ramp (82) located above the upper tube plate (50).

4. Fast neutron nuclear reactor comprising a vessel (14) filled with liquid metal (12) and sealed at its upper end by a slab (16), at least one pump (26) ensuring the circulation of liquid metal between the reactor core (10) and at least one heat exchanger (24) suspended on the slab, the primary fluid being the liquid metal contained in the vessel, characterized in that the heat exchanger is constructed according to any one of the claims 1 to 3, the reactor also comprising external cooling means (84) connected between the exchanger inlet (76) and outlet (80) pipes.

5. Reactor according to claim 4, characterized in that the pumping means are positioned between the exchanger (24) and the external cooling means (84).

FIG. 1

FIG. 2